# EUROPEAN PATENT SPECIFICATION

(11) **EP 1 655 889 B1**
(45) Date of publication and mention of the grant of the patent: **06.08.2008**
(21) Application number: 04762079.4
(22) Date of filing: 13.08.2004
(51) Int. Cl.: H04L 12/28

(54) **METHOD OF USER TERMINAL MAINTAINING INITIAL NETWORK SELECT SETUP IN THE WIRELESS LOCAL AREA NETWORK**
VERFAHREN, WODURCH EIN BENUTZERENDGERÄT DIE ANFÄNGLICHE NETZWERKAUSWAHLEINRICHTUNG IN EINEM DRAHTLOSEN LOKALEN NETZWERK BEIBEHÄLT
PROCEDE DE MAINTIEN PAR LE TERMINAL UTILISATEUR D'UNE CONFIGURATION DE SELECTION DE RESEAU INITIALE DANS UN RESEAU LOCAL SANS FIL

(30) Priority: 14.08.2003 CN 03153296
(43) Date of publication of application: 10.05.2006
(73) Proprietor: Huawei Technologies Co., Ltd., Longgang District, Shenzhen, Guangdong 518129 (CN)
(72) Inventor: ZHANG, Wenlin, Shenzhen, Guangdong 518129 (CN)
(74) Representative: Körber, Martin Hans
(86) International application number: PCT/CN2004/000943
(87) International publication number: WO 2005/018148

(56) References cited:
- WO-A-01/19120
- WO-A-03/037023
- WO-A-03/061203
- WO-A1-03/037023
- CN-A- 1 378 405
- US-A1- 2002 039 367
- 3GPP: "3rd Generation Partnership Project; Technical Specification Group Services and System Aspects; 3GPP system to Wireless Local Area Network (WLAN) Internetworking; System Description (Release 6)" DRAFT 3GPP TS 23.234 V1.10.0, May 2003 (2003-05), pages 1-77, XP002264842

## Description

### Field of the invention

The present invention relates to network accessing techniques, more specifically, to a method for user equipment (UE) maintaining the setting of initial network selection in a wireless local area network (WLAN).

### Background of the invention

At users' demand for an increasingly high rate of wireless access, there emerges WLAN, which is able to provide high-rate wireless data access in a relatively small area. Various techniques have been used in WLAN, among which a technical standard with more applications is IEEE 802.11b. This standard utilizes the frequency band of 2.4GHz with a data transmission rate up to 11 Mbps. Other technical standards utilizing the same frequency band include IEEE 802.11g and the Bluetooth, wherein the data transmission rate of IEEE 802.11g is up to 54Mbps. There are other new standards such as IEEE 802.11 a and ETSI BRAN Hiperlan2 which use the frequency band of 5GHz with the transmission rate up to 54 Mbps as well.

Although there are various standards for wireless access, most WLAN are used for transferring IP data packets. The specific WLAN access standard adopted by a wireless IP network is usually transparent to the upper-level IP. Such a network is typically configured with Access Points (AP) for implementing wireless access of UE and with network controlling and connecting devices for implementing IP transmission.

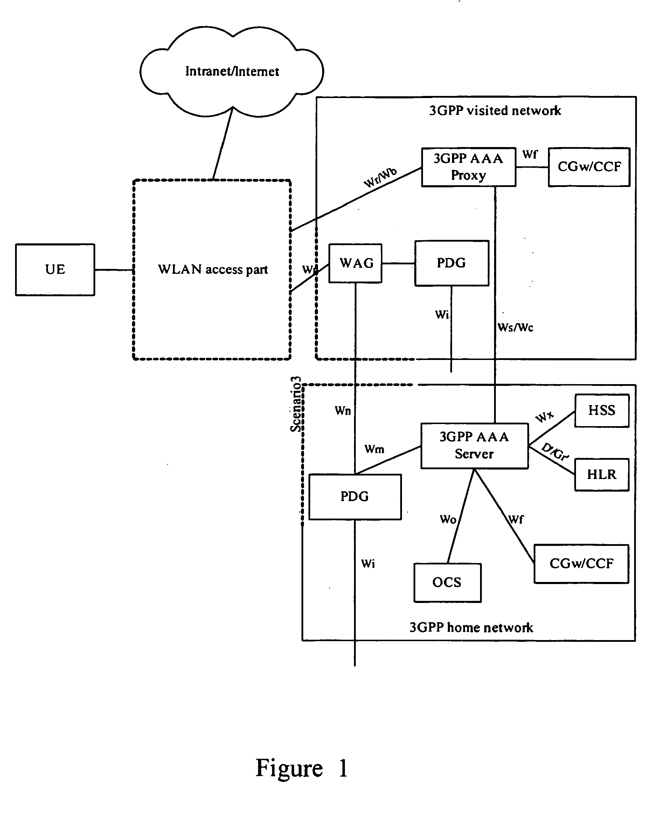

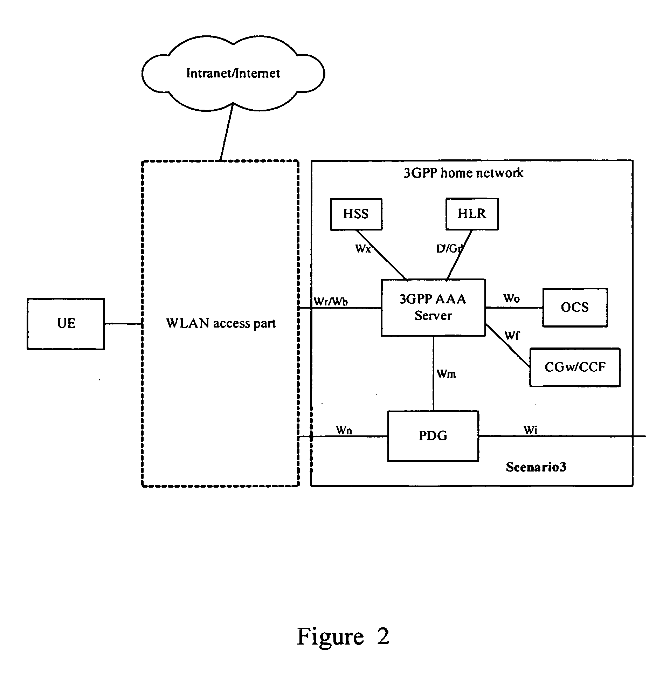

Along with the rising and developing of WLAN, focus of research is shifting to the inter-working of WLAN with various mobile communications networks, such as GSM, CDMA, WCDMA, TD-SCDMA, and CDMA2000. In accordance with the 3GPP standards, UE is able to connect with Internet and Intranet as well as the home network and visited network of a 3GPP system via a WLAN access network. To be specific, when getting accessed locally, a WLAN UE will get connected with the 3GPP home network via a WLAN access network, as shown in Figure 2; when roaming, it will get connected with a 3GPP visited network via the WLAN access network. Some entities of a 3GPP visited network are connected with corresponding entities of the 3GPP home network, for instance, the 3GPP Authentication, Authorization, Accounting (AAA) proxy in the visited network is connected with the 3GPP AAA server in the home network, the WLAN Access Gateway (WAG) in the visited network is connected with the Packet Data Gateway (PDG) in the home network, as shown in Figure 1. Figure1 and Figure 2 are the schematic diagrams illustrating the networking architectures of a WLAN inter-working with a 3GPP system under roaming and non-roaming circumstances, respectively.

As shown in Figure 1 and Figure 2, a 3GPP system primarily comprises Home Subscriber Server (HSS)/ Home Location Register (HLR), 3GPP AAA server, 3GPP AAA proxy, WAG, PDG, Charging Gateway (CGw)/Charging information Collecting Function (CCF), and Online Charging System (OCS). UE, WLAN access network, and all the entities of the 3GPP system together constitute a 3GPP-WLAN inter-working network, which can be regarded as a WLAN service system. In this service system, 3GPP AAA server is in charge of authentication, authorization, and accounting of UE, collecting the charging information sent from the WLAN access network and transferring the information to the charging system; PDG is in charge of transmission of user data from the WLAN access network to the 3GPP network or other packet data networks; and the charging system mainly receives and records the charging information of UE transferred from the network while OCS instructs the network to transmit online charging information periodically in accordance with the expenses of the online charged users, makes statistics and conducts control.

Under non-roaming circumstances, when a WLAN UE desires to get accessed directly to the Internet/Intranet, the UE can access to Internet/Intranet via a WLAN access network after it accomplishes authentication with the AAA server (AS) via the WLAN access network. Should the WLAN UE desire to get accessed to the service of 3GPP packet switched (PS) domain as well, it may further request the service of Scenario 3 from the 3GPP home network. That is, the WLAN UE initiates a service authorization request for Scenario 3 to the AS of the 3GPP home network, which will carry out service authentication and authorization for that request; if the authentication and authorization succeed, AS will send an access accept message to the UE and assign a corresponding PDG for the UE. When a tunnel is established between the UE and the assigned PDG, the UE will be able to get accessed to the service of 3GPP PS domain. Meanwhile, the offline charging system and OCS records the charging information in accordance with the UE's occupation of the network.

Under roaming circumstances, when a WLAN UE desires to get accessed directly to the Internet/Intranet, it may make a request to the 3GPP home network by way of the 3GPP visited network for access to the Internet/Intranet. Should the UE also desire to request the service of Scenario 3 to get accessed to the service of the 3GPP PS domain, the UE needs to initiate via the 3GPP visited network a service authorization process at the 3GPP home network. The authorization is carried out likewise between the UE and AS of the 3GPP home network. After the authorization succeeds, AS assigns the corresponding home PDG for the UE, then the UE will be able to get accessed to the service of 3GPP PS domain of the home network after it establishes a tunnel with the assigned PDG via the WAG of the 3GPP visited network.

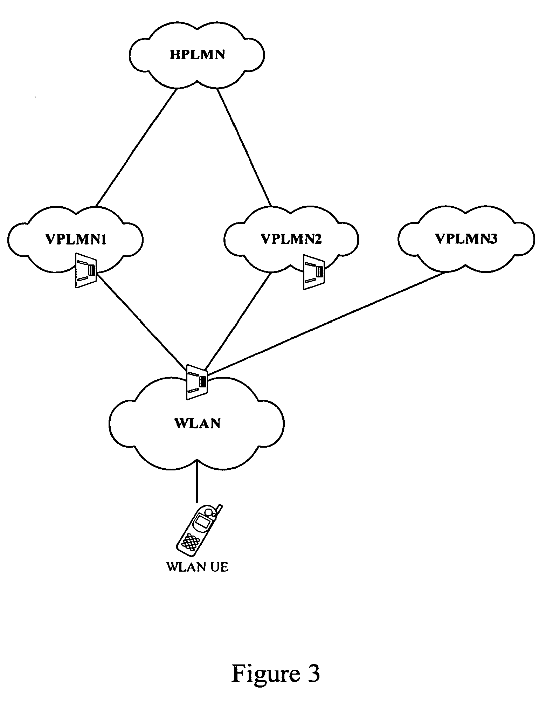

As shown in Figure 3, in a 3GPP-WLAN inter-working network, if a WLAN is connected at the same time with a plurality of 3GPP visited networks, that is, a plurality of wireless communication networks (3GPP visited networks herein refer to Visited Public Land Mobile Networks (VPLMN)), it will be necessary for a WLAN UE to select the desired VPLMN to access after the UE gets accessed to the WLAN. As the description in 3GPP TS 23.234 v.1.10.0, a network selection procedure is described. For instance, in China, a WLAN access network may be connected simultaneously with two operating VPLMN, China Mobile and China Unicom; then a user of China Unicom, after getting accessed via the WLAN, has to instruct the WLAN access network to get it accessed to the operating VPLMN of China Unicom.

For another instance, a French user may roam to a WLAN in China, if the home network of the French user has roaming protocols with both China Mobile and China Unicom, then under the circumstances that the WLAN access network is connected with both China Mobile and China Unicom, this French user needs to select the VPLMN to get accessed after accessing the WLAN. At present, under the above circumstances, a WLAN UE will first select the wireless communication network to be accessed currently, then notify the WLAN access network of the selected network by means of the network selection information, wherein the network selection information may be placed in a field separately configured or placed in the user identity field defined in the format of Network Access Identifier (NAI).

However, if a WLAN UE makes a network selection every time, consumption of network resources would be very high. For example, if a user roams away from the local area while the home network of the user is not directly connected with the WLAN access network currently covering the user, in case that the UE always sends to the WLAN access network the information of its own home network as the initial network selection, a network selection procedure would be triggered every time the UE requests to access and the WLAN would issue the information of the wireless communication networks to the UE so that the UE could make a decision and selection before getting accessed, causing consumption of network resources and delay of the user's access. If the wireless communication network selected last time is simply taken as the current selection, it is likely that the currently selected network is not the best PLMN for a WLAN UE which has moved into an area covered by another WLAN. In another word, when a WLAN UE is covered by a new WLAN, this WLAN is likely to connect directly with the Home PLMN (HPLMN) of the UE or other better VPLMN for the UE to access although the default network or the last selected network for the UE to access has a roaming relationship with the home network of this UE. Under these circumstances, it is impossible to make a new network selection of operating network because there has been a default or selected network for the UE to be routed, thus it is impossible to ensure that the UE select the best PLMN connected with the current WLAN, for example, HPLMN. In view of this, a method for optimizing the last network selection has been put forward in Chinese patent CN 1265589C, of which the key idea is: UE decides the network selection information to be carried according to the detected change of WLAN access network or the setting by the user, if there is no change, continue to carry the information of the last successfully accessed network; otherwise take the pre-configured initial selection of network as the network selection information. This method, however, is complicated to implement on the part of UE. Moreover, in some cases, UE may have known which PLMN is desired to be accessed by itself, thus it would be unnecessary to use the above method.

WO 03/061203 discloses a solution for arranging temporary MAC addresses for wireless terminals, however, does not disclose any solution for network selection when WLAN UE access to the WLAN.

### Summary of the invention

The present invention provides a method for WLAN UE maintaining the setting of initial network selection such that UE is able to make proper and timely selection of wireless communication network to access when the UE is trying to get accessed via a WLAN that is connected with a plurality of wireless communication networks.

### The technical solution in accordance with this invention is as follows:

A method for WLAN UE maintaining a setting of initial network selections and able to access its home wireless communication network (HPLMN) via a WLAN connected to a plurality of selectable wireless communication networks (VPLMN), wherein an initial network selection is stored in UE when the UE enters a roaming state, includes followings:
the UE detects and acquires current time and/or current WLAN-associated information;
if an effective time preset at the same time of storing the initial network selection in the UE reaches or exceeds the current time, or if the current WLAN-associated information does not match WLAN-associated information stored in the UE, the UE modifies the initial network selection, otherwise, keeps the initial network selection.

The method includes that the UE decides whether the effective time reaches or exceeds the current time to the time previously acquired by the UE, if the effective time reaches or exceeds the current time, modifies the initial network selection; otherwise, compares the current WLAN-associated information with the WLAN-associated information stored in the UE, if the current WLAN-associated information does not match the WLAN-associated information stored in the UE, modifies the initial network selection; otherwise, keeps the initial network selection. Or the method includes that the UE, compares the current WLAN-associated information with the WLAN-associated information stored in the UE, if the current WLAN-associated information does not match the WLAN-associated information stored in the UE, modifies the initial network selection; otherwise, decides whether the effective time reaches or exceeds the current time the current time, if the effective time reaches or exceeds the current time, modifies the initial network selection; otherwise, keeps the initial network selection.

In the above solution, the WLAN-associated information comprises a Service Set ID (SSID) of the WLAN, or a mobile country code (MCC) to which the WLAN belongs, or an identifier of a region of the WLAN.

In the above solution, the procedure of modifying the initial network selection comprises: modifies the initial network selection stored in the UE to the home network of the UE; or modifies the initial network selection stored in the UE to null.

The method further comprises: sends a modifying notification message to a user using the UE after the initial network selection stored in the UE is modified.

The method further comprises: sends a prompting message to a user using the UE to ask the user whether to modify the initial network selection, before the UE modifies the initial network selection stored in the UE.

In accordance with the method of this invention for WLAN UE maintaining the setting of initial network selection, a UE decides according to the change of the currently detected time information or WLAN-associated information whether the effective time has been reached or exceeded or whether the WLAN service area currently covering the UE has changed so as to decide whether to update the initial network selection to the home network of the current UE. This method ensures that WLAN UE make a timely and accurate selection of a proper wireless communication network to access when the UE switches between the roaming and non-roaming states, avoiding repeated selection of wireless communication network every time UE desires to get accessed, reducing the time and number of accesses, and optimizing the accessing procedure of UE. Moreover, the possibility of one-time access is raised, and communication cost is stored to a certain extent when the WLAN has changed, for example, when a user forgets to modify the initial network selection after she/he returns home from a roaming area.

### Brief description of the drawings

Figure 1 is a schematic diagram illustrating the network architecture of inter-working WLAN system and 3GPP system under roaming circumstances;
Figure 2 is a schematic diagram illustrating the network architecture of inter-working WLAN system and 3GPP system under non-roaming circumstances;
Figure 3 is a schematic diagram illustrating the network architecture of WLAN connecting with a plurality of visited networks;
Figure 4 is the flowchart for updating the initial network selection in accordance with this invention.

### Detailed description of preferred embodiments

In accordance with this invention, a UE decides according to the change of the currently detected time information or WLAN-associated information whether it is necessary to modify the setting of initial network selection, if necessary, updates the initial network selection set in the current UE such that the updated initial network selection would be used for trying the access; otherwise, no updating is made and the set initial network selection would still be used when the selection is required. In this way, it is ensured that, when the WLAN service area currently covering a UE has changed, the UE is able to update in time its own initial network selection, i.e. the information of the wireless communication network with the highest priority for access, thus accessing the best wireless communication network in the fastest way.

The time information here refers to the effective time corresponding to the set initial network information. The WLAN-associated information here refers to the information that can be used for deciding whether the WLAN service area covering the UE has changed, e.g. the SSID of WLAN, or MCC, or region ID.

Every UE usually sets its home network as the initial network selection when the UE is covered by the local networks while, in the roaming state, since the covering WLAN has changed, a user would re-set the initial network selection stored in the UE as the best wireless communication network that is connected with the WLAN covering the UE and has a roaming relationship with the home network of the UE. Therefore, the prerequisite for implementing this invention is: each UE sets its own home network HPLMN as the default initial network selection, and when the WLAN has changed, the initial network selection stored in the UE will have been re-set. Furthermore, the initial network selection is used as the network selection information to be carried to the current WLAN access network when the WLAN has changed.

In accordance with this invention, an effective time is set for the initial network selection at the same time of re-setting the initial network selection for the current UE. If the effective time is reached, the initial network selection stored in the current UE will be reset to the home network of this UE so as to ensure that the self-stored initial network selection of the UE could be reset to the home network of this UE when this UE leaves the roaming area, e.g. returns to the local network. When the effective time is reached, various means may be used to inform the user, e.g. displaying a message, playing a prompting tone, etc.

In accordance with this invention, WLAN-associated information and the corresponding wireless communication network with the highest priority to access may be simultaneously stored in UE such that the current UE can decide by comparing the currently detected WLAN-associated information with the stored WLAN-associated information whether it is necessary to reset the initial network selection currently stored in the UE to the home network of this UE. For example, the WLAN-associated information SSID1, SSID3, and SSID8 corresponding to the wireless communication network M1 have been set in UE A as the initial network selection, if the WLAN-associated information currently detected by UE A is SSID2, not any of SSID1, SSID3, and SSID8, UE A will update its own initial network selection to its home network. For another example, the WLAN-associated information MCC 1 corresponding to the operating network M2 has been set in UE B as the initial network selection, if the WLAN-associated information currently detected by UE B is MCC2, UE B will update its own initial network selection to its home network. UE may learn that the WLAN has changed, i.e. the SSID or MCC has changed, by various means, for instance, detecting the WLAN broadcasting, detecting other wireless network broadcasting, etc..

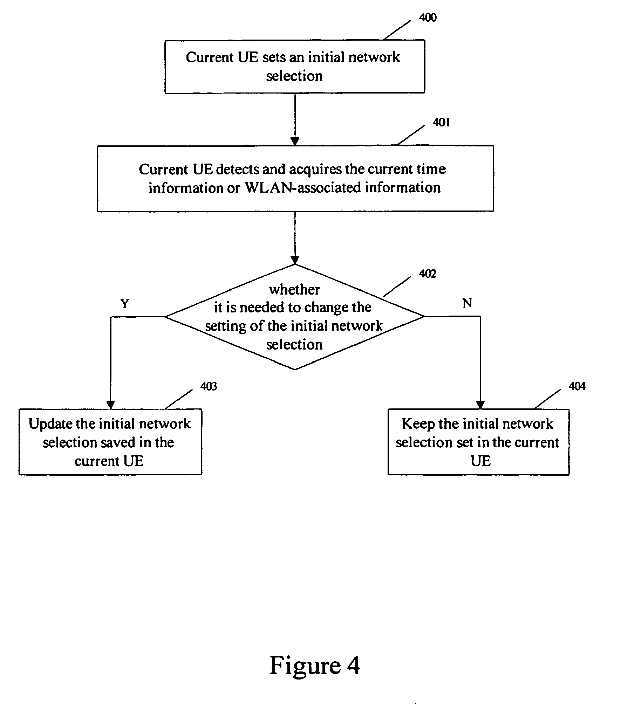

As shown in Figure 4, the process of updating the initial network selection in accordance with this invention comprises the steps of:
Step 400: The current UE set an initial network selection when entering a roaming state;
Step 401: The current UE detects and acquires the current time information or WLAN-associated information;
Steps 402 ~ 404: Decide according to the change of the detected time information or WLAN-associated information whether it is necessary to change the setting of initial network selection, if necessary, update the initial network selection stored in the current UE; otherwise, keep the initial network selection already set in the current UE. Typically, the initial network selection in the UE is updated to the home network of this UE; however, the initial network selection may also be updated to null as required.

Obviously, it may be decided by the user whether to update the initial network selection in the UE to the home network of the UE, i.e. when the UE detects the change of the WLAN-associated information, a message may be displayed to the user, asking the user whether it is necessary to modify the initial network selection information. If necessary, reset the initial network selection to the home network of the UE, or the user may re-select the setting; otherwise, make no modification. If there is no response from the user for a certain period of time, automatic updating may be carried out as default and then a prompt is displayed to the user.

There are three solutions for implementing the method in accordance with this invention: first, only the effective time of the set initial network selection is stored in the UE, then only decide whether the current time has reached the effective time; second, only the WLAN-associated information is stored in the UE, then only compare the currently detected WLAN-associated information with the self-stored WLAN-associated information so as to decide whether the WLAN service area covering the UE has changed; the third solution is a combination of the above two, i.e. store simultaneously in the UE the effective time of the set initial network selection and the WLAN-associated information, then decide on the time before comparing the WLAN-associated information, or compare the WLAN-associated information before deciding on the time.

An example is given hereinafter to describe in detail the implementation of the above three solutions: The home network of subscriber C is China Mobile in China. When subscriber C roams to Britain, it is not covered by China Mobile, but is covered by Vodafone which has a roaming relationship with China Mobile. Thus set the initial network selection in UE C to Vodafone and at the same time set the effective time thereof as five days.

In case of the first solution, if the UE detects that the current time has been the sixth day, i.e. the current time has exceeded the effective time of five days, then reset the initial network selection in UE C to China Mobile.

In case of the second solution, after UE C roams from China to Britain, SSID1, SSID3, or MCC of 44, the WLAN-associated information corresponding to Vodafone will be stored in UE C. If UE C has currently returned to China or roamed to France, UE C will detect that the SSID of the current WLAN is no longer SSID1 or SSID3 or detect that the MCC corresponding to the current WLAN is no longer 44, which means that the WLAN service area covering the UE has changed, then reset the initial network selection in UE C to China Mobile.

In case of the third solution, it is possible to decide first whether the current time has reached 5 days, if the current time has reached 5 days, just reset the initial network selection in UE C to China Mobile; otherwise, decide whether the currently detected WLAN-associated information is matched with one piece of the self-stored WLAN-associated information in the UE C, if matched, no updating is carried out; otherwise, reset the initial network selection in UE C to China Mobile. Alternatively, decide first whether the currently detected WLAN-associated information is matched with one piece of the self-stored WLAN-associated information in the UE C, if not, reset the initial network selection in UE C to China Mobile; otherwise, decide whether the 5-day period has been reached, if the 5-day period has been reached, reset the initial network selection in UE C to China Mobile; if not, no updating is carried out.

The foregoing description is only a preferred embodiment of this invention and is not for use in limiting the protection scope thereof.

## Claims

1. A method for wireless local area network, WLAN, user equipment, UE, maintaining a setting of initial network selections and able to access its home wireless communication network, HPLMN, via a WLAN connected to a plurality of selectable wireless communication networks, VPLMN, wherein an initial network selection is stored in UE when the UE enters a roaming state (400), **characterized by** comprising:
the UE detecting and acquiring current time or current WLAN-associated information (401);
if an effective time preset at the same time of storing the initial network selection in the UE reaches or exceeds the current time, or if the current WLAN-associated information does not match WLAN-associated information stored in the UE, modifying the initial network selection, otherwise, keeping the initial network selection (402 to 404).

2. The method according to Claim 1, wherein the procedure of modifying the initial network selection comprises: deciding whether the effective time reaches or exceeds the current time to the time previously acquired by the UE, if the effective time reaches or exceeds the current time, modifying the initial network selection; otherwise, comparing the currently WLAN-associated information with the WLAN-associated information stored in the UE, if the current WLAN-associated information does not match the WLAN-associated information stored in the UE, modifying the initial network selection; otherwise, keeping the initial network selection.

3. The method according to Claim 1, wherein the procedure of modifying the initial network selection comprises: comparing the current WLAN-associated information with the WLAN-associated information stored in the UE, if the current WLAN-associated information does not match the WLAN-associated information stored in the UE, modifying the initial network selection; otherwise, deciding whether the effective time reaches or exceeds the current time, if the effective time reaches or exceeds the current time, modifying the initial network selection; otherwise, keeping the initial network selection.

4. The method according to Claim 1, 2, or 3, wherein the WLAN-associated information comprises at least one of a service set ID, SSID, of the WLAN, a mobile country code, MCC, and an identifier of a region of the WLAN.

5. The method according to Claim 1, 2, 3 or 4, wherein the procedure of modifying the initial network selection comprises one of: modifying the initial network selection stored in the UE to the home network of the UE and modifying the initial network selection stored in the UE to null.

6. The method according to any of Claims 1 to 5, further comprising: sending a modifying notification message to a user using the UE after the initial network selection stored in the UE is modified.

7. The method according to any of Claims 1 to 6, further comprising: sending a prompting message to a user using the UE to ask the user whether to modify the initial network selection, before the UE modifying the initial network selection stored in the UE.

## Patentansprüche

1. Verfahren für ein Benutzergerät (UE, User Equipment) eines drahtlosen lokalen Netzwerks (WLAN, Wireless Local Area Network), das eine Einstellung der anfänglichen Netzwerkauswahlen beibehält und in der Lage ist, auf das drahtlose Heimkommunikationsnetzwerk, HPLMN (Home Wireless Communication Network), über ein WLAN zuzugreifen, das mit einer Vielzahl von auswählbaren drahtlosen Kommunikationsnetzwerken (VPLMN, Visited Public Land Mobile Networks) verbunden ist, wobei eine anfängliche Netzwerkauswahl in dem UE gespeichert wird, wenn das UE in einen Roaming-Zustand (400) übergeht, **dadurch gekennzeichnet, dass** es umfasst:
Erfassen und Erwerben der aktuellen Zeit oder der aktuellen mit dem WLAN verknüpften Informationen (401)durch das UE;
wenn eine tatsächliche Zeit (Effective Time), die zum Zeitpunkt des Speichems der anfänglichen Netzwerkauswahl in dem UE vorgegeben wurde, die aktuelle Zeit erreicht oder überschreitet, oder wenn die aktuelle mit dem WLAN verknüpfte Information nicht mit der im UE gespeicherten, mit dem WLAN verknüpften Information übereinstimmt, wird die anfängliche Netzwerkauswahl geändert, andernfalls wird die aktuelle Netzwerkauswahl (402 bis 404) beibehalten.

2. Verfahren gemäß Anspruch 1, wobei die Vorgehensweise der Änderung der anfänglichen Netzwerkauswahl umfasst: Entscheiden, ob die tatsächliche Zeit die aktuelle Zeit für die Zeit, die zuvor vom UE erworben wurde, erreicht oder überschreitet, und wenn die tatsächliche Zeit die aktuelle Zeit erreicht oder überschreitet, Ändern der anfänglichen Netzwerkauswahl; andernfalls Vergleichen der aktuell mit dem WLAN verknüpften Information mit der im UE gespeicherten, mit dem WLAN verknüpften Information, und wenn die aktuelle mit dem WLAN verknüpfte Information nicht mit der im UE gespeicherten, mit dem WLAN verknüpften Information übereinstimmt, Ändern der anfänglichen Netzwerkauswahl; andernfalls Beibehalten der anfänglichen Netzwerkauswahl.

3. Verfahren gemäß Anspruch 1, wobei die Vorgehensweise der Änderung der anfänglichen Netzwerkauswahl umfasst: Vergleichen der aktuellen mit dem WLAN verknüpften Information mit der im UE gespeicherten, mit dem WLAN verknüpften Information, und wenn die aktuell mit dem WLAN verknüpfte Information nicht mit der im UE gespeicherten, mit dem WLAN verknüpften Information übereinstimmt, Ändern der anfänglichen Netzwerkauswahl; andernfalls Entscheiden, ob die tatsächliche Zeit die aktuelle Zeit erreicht oder überschreitet, und wenn die tatsächliche Zeit die aktuelle Zeit erreicht oder überschreitet, Ändern der anfänglichen Netzwerkauswahl, andernfalls Beibehalten der anfänglichen Netzwerkauswahl.

4. Verfahren gemäß Anspruch 1, 2, oder 3, wobei die mit dem WLAN verknüpfte Information zumindest eine von einem Dienst eingestellte ID, SSID des WLAN, einen Mobile Country Code, MCC, und einen Kennzeichner einer Region des WLANs umfasst.

5. Verfahren gemäß Anspruch 1, 2, 3 oder 4, wobei die Vorgehensweise der Änderung der anfänglichen Netzwerkauswahl eines der folgenden umfasst:
Ändern der anfänglichen im UE gespeicherten Netzwerkauswahl für das Heimnetzwerk des UE und Ändern der anfänglichen im UE gespeicherten Netzwerkauswahl auf Null.

6. Verfahren gemäß einem der Ansprüche 1 bis 5, weiterhin umfassend: Senden einer Benachrichtigungsmeldung über die Änderung an einen das UE verwendenden Benutzer, nachdem die anfängliche in dem UE gespeicherte Netzwerkauswahl geändert wurde.

7. Verfahren gemäß einem der Ansprüche 1 bis 6, weiterhin umfassend: Senden einer Benachrichtigungsmeldung an einen das UE verwendenden Benutzer, um den Benutzer zu fragen, ob die anfängliche Netzwerkauswahl geändert werden soll, bevor die UE die anfängliche im UE gespeicherte Netzwerkauswahl ändert.

## Revendications

1. Procédé pour maintenir par un équipement d'utilisateur, UE, de réseau local sans fil, WLAN, une configuration de sélections de réseau initiales et apte à accéder à son réseau de communication sans fil domestique, HPLMN, par l'intermédiaire d'un réseau WLAN connecté à une pluralité de réseaux de communication sans fil sélectionnables, VPLMN, dans lequel une sélection de réseau initiale est stockée dans l'UE lorsque l'UE entre dans un état d'itinérance (400), **caractérisé en ce qu'**il comporte les étapes dans lesquelles:
l'UE détecte et acquiert des informations connexes au réseau WLAN (401) en cours ou au temps en cours;
si un préréglage du temps effectif, à un temps identique à celui du stockage de la sélection de réseau initiale dans l'UE, atteint ou dépasse le temps en cours, ou si les informations connexes au WLAN en cours ne correspondent pas aux informations connexes au WLAN stockées dans l'UE, modifier la sélection de réseau initiale, dans le cas inverse, maintenir la sélection de réseau initiale (402 à 404).

2. Procédé selon la revendication 1, dans lequel la procédure, consistant à modifier la sélection de réseau initiale, comporte les étapes consistant à: décider si le temps effectif atteint ou dépasse le temps en cours au temps précédemment acquis par l'UE, si le temps effectif atteint ou dépasse le temps en cours, modifier la sélection de réseau initiale; dans le cas inverse, comparer les informations connexes au WLAN en cours aux informations connexes au WLAN stockées dans l'UE, si les informations connexes au WLAN en cours ne correspondent pas aux informations connexes au WLAN stockées dans l'UE, modifier la sélection de réseau initiale; dans le cas inverse, maintenir la sélection de réseau initiale.

3. Procédé selon la revendication 1, dans lequel la procédure, consistant à modifier la sélection de réseau initiale, comporte les étapes consistant à: comparer les informations connexes au WLAN en cours aux informations connexes au WLAN stockées dans l'UE, si les informations connexes au WLAN en cours ne correspondent pas aux informations connexes au WLAN stockées dans l'UE, modifier la sélection de réseau initiale; dans le cas inverse, décider si le temps effectif atteint ou dépasse le temps en cours, si le temps effectif atteint ou dépasse le temps en cours, modifier la sélection de réseau initiale, dans le cas inverse, maintenir la sélection de réseau initiale.

4. Procédé selon la revendication 1, 2 ou 3, dans lequel les informations connexes au WLAN comportent au moins une identification (ID) d'ensemble de services, SSID, du réseau WLAN, un indicatif de pays mobile, MCC, et un identificateur d'une zone du réseau WLAN.

5. Procédé selon la revendication 1, 2, 3 ou 4, dans lequel la procédure consistant à modifier la sélection de réseau initiale comporte l'une des étapes consistant à: changer la sélection de réseau initiale stockée dans l'UE par la sélection du réseau domestique de l'UE et définir la sélection de réseau initiale stockée dans l'UE à zéro.

6. Procédé selon l'une quelconque des revendications 1 à 5, comprenant en outre les étapes consistant à: transmettre un message de notification de modification à un utilisateur utilisant l'UE après que la sélection de réseau initiale stockée dans l'UE a été modifiée.

7. Procédé selon l'une quelconque des revendications 1 à 6, comprenant en outre l'étape consistant à: transmettre d'un message d'incitation à un utilisateur utilisant l'UE pour demander à l'utilisateur s'il convient de modifier la sélection de réseau initiale, avant que l'UE ne modifie la sélection de réseau initiale stockée dans l'UE.
